# EUROPÄISCHE PATENTSCHRIFT

(11) **EP 0 956 309 B1**
(45) Veröffentlichungstag und Bekanntmachung des Hinweises auf die Patenterteilung: **02.04.2003**
(21) Anmeldenummer: 98964449.7
(22) Anmeldetag: 26.11.1998
(51) Int. Cl.: C08F 283/02, C09D 151/08

(54) **VERFAHREN ZUR HERSTELLUNG VON GLYCIDYL(METH)ACRYLAT-COPOLYMEREN**
METHOD FOR PRODUCING GLYCIDYL (METH)ACRYLATE COPOLYMERS
PROCEDE DE PRODUCTION DE COPOLYMERES DE GLYCIDYL(METH)ACRYLATE

(30) Priorität: 28.11.1997 DE 19752747
(43) Veröffentlichungstag der Anmeldung: 17.11.1999
(73) Patentinhaber: E.I. DU PONT DE NEMOURS AND COMPANY, Wilmington Delaware 19898 (US)
(72) Erfinder: SCHWEDE, Christian, D-42119 Wuppertal (DE); SCHUBERT, Walter, D-42349 Wuppertal (DE); FLOSBACH, Carmen, D-42287 Wuppertal (DE); BANDERMANN, Friedhelm, D-42555 Velbert (DE); WOLF, Aurel, D-45279 Essen (DE)
(74) Vertreter: Hrabal, Ulrich, Dr.
(86) Internationale Anmeldenummer: EP9807646
(87) Internationale Veröffentlichungsnummer: WO99028361

(56) Entgegenhaltungen:
- DE-A- 4 209 035
- US-A- 4 110 187

## Beschreibung

Die Erfindung betrifft ein Verfahren zur kontinuierlichen Herstellung von niedrigmolekularen Glycidyl(meth)acrylat-Copolymeren mit einer engen Molekulargewichtsverteilung.

Zur Herstellung von niedrigmolekularen Acryl-Polymeren sind eine Reihe von Verfahrensweisen bekannt. Die Erzielung der gewünschten Molmasse und -verteilung wird dabei beeinflußt durch die Art der Prozeßführung (diskontinuierliche, semikontinuierliche, kontinuierliche Fahrweise), durch die Reaktionsbedingungen (z.B. Reaktionstemperatur) und die Auswahl des Stoffsystems (Lösungsmittel, Initiator, Kettenregler). So können Lösemittel, Initiatorart und -konzentration sowie Regler gezielt zur Einstellung einer gewünschten Molmasse und -verteilung gewählt werden.

Insbesondere diskontinuierliche und semikontinuierliche Techniken verlaufen nicht immer unkompliziert, da sich unerwünschte Anteile an Homopolymerisat oder Copolymerisat mit einer unerwünschten Zusammensetzung oder Mikrostruktur bilden können.

Die semikontinuierliche Herstellung von (Meth)acryl-Polymeren in Gegenwart von Polyester-Oligomeren ist dem Fachmann bekannt. Die Herstellung des Polymeren kann dabei durch radikalische Polymerisation nach üblichen Verfahren erfolgen, wobei mindestens ein Teil und vorzugsweise mindestens die Hälfte des für die Synthese des (Meth)acryl-Polymerisats zu verwendenden Monomergemisches zu dem vorgelegten Polyesterharz bei einer bestimmten Reaktionstemperatur zudosiert wird. Die Polymerisationsreaktion kann dabei mit bekannten Radikalinitiatoren gestartet werden. Bei der Polymerisation können die Monomeren auch getrennt bzw. zeitlich versetzt zudosiert werden. Das Polyesterharz kann bevorzugt in einem organischen Lösemittel bzw. in Lösemitteln, wie sie auf dem Lackgebiet üblich sind, gelöst vorgelegt werden.

Im allgemeinen werden derartige Verfahren bevorzugt unter Verwendung von organischem Lösemittel durchgeführt. Darüber hinaus können durch die semi- und diskontinuierliche Arbeitsweise nur eingeschränkt chemisch einheitliche Copolymerisate mit gewünschter Mikrostruktur erhalten werden. Außerdem wird eine für bestimmte Anwendungen erforderliche enge Molekulargewichtsverteilung nur unter Schwierigkeiten erreicht.

Die EP-A-0 206 072 beschreibt ein Verfahren zur Herstellung von niedrigmolekularen Acrylpolymeren in einer halbkontinuierlichen Arbeitsweise. Im allgemeinen wird ein als Lösemittel dienendes Polymer-Material vorgelegt, auf Reaktionstemperatur erhitzt und die Vinylmonomerkomponente und der Radikalinitiator werden dann in kontinuierlicher Weise zugeführt. Nach der Zuführung der Komponenten erfolgt die Reaktion bis zu ihrem Ende und das Reaktionsprodukt wird erst danach abgetrennt. Als Vinylmonomerkomponenten können beispielsweise die üblichen (Meth)acrylate, Styrolderivate und Glycidyl(meth)acrylate eingesetzt werden. Das als Lösemittel dienende Polymer-Material hat ein Molekulargewicht von mindestens 200, vorzugsweise mindestens 1000 g/Mol. Es enthält vorzugsweise funktionelle Gruppen, welche im wesentlichen mit den Funktionalitäten der Vinylmonomerkomponente oder des Polymerproduktes nicht reagieren. Als Polymer-Material können beispielsweise Polyesterpolyole eingesetzt werden. Die Kombination von hoher Reaktionstemperatur und hoher Dosiergeschwindigkeit bei der Polymerisation führt zwar zu einem niedrigmolekularen, nicht gelierten Reaktionsprodukt; ein einheitliches Produkt kann jedoch nur unter hohem Aufwand zur Schaffung der Reaktionsbedingungen erzielt werden. Es können darüber hinaus unreagierte Vinylmonomerkomponenten in dem Reaktionsgemisch vorhanden sein, beispielsweise in einer Menge von bis zu 10 Gew.-%, bezogen auf die Reaktionsmischung.

Gemäß US 4 414 370, US 4 529 787 und US 4 546 160 werden niedrigmolekulare Vinylpolymere mit enger Molekulargewichts-Verteilung hergestellt, indem eine Vinylmonomeren-Mischung kontinuierlich bei hoher Reaktionstemperatur und bestimmten Fließraten in eine geschmolzene Mischung aus unreagiertem Vinylmonomer und dem daraus entstandenen Vinylpolymer gegeben wird. Diese ermöglichen neben der Bildung des Reaktionsproduktes das Beibehalten einer bestimmten Menge an Reaktionsmischung in der Reaktionszone. Im gleichen Maße, wie die Monomerkomponenten zugeführt werden, wird das Reaktionsprodukt aus der Reaktionszone entfernt. Nicht umgesetzte Monomere können wiederverwendet werden durch Rückführung in das Reaktionssystem. Zur Herabsetzung der Viskosität des Produktes sowie gegebenenfalls zur Kontrolle der Reaktionsparameter kann ein Lösemittel enthalten sein, beispielsweise höhere aromatische Alkohole, Glykolether und Glykolester.

Aufgabe der vorliegenden Erfindung ist es, niedrigmolekulare Glycidyl(meth)acrylat-Copolymere mit enger Molekulargewichtsvertellung in kontinuierlicher Weise herzustellen ohne Verwendung von zusätzlichem Lösemittel. Dabei soll der Monomer-Umsatz möglichst vollständig sein.

Es hat sich gezeigt, daß diese Aufgabe gelöst werden kann durch ein Verfahren, bei dem das niedrigmolekulare Glycidyl(meth)acrylat-Copolymer kontinuierlich im Schoße eines niedrigmolekularen Polyesters, nämlich eines Polyester-Ollgomeren mit einem Zahlenmittel der Molmasse (Mn) von 200 bis 2000 g/mol aus einer Monomer-Mischung, welche das Glycidyl(meth)acrylat enthält, hergestellt werden kann.

Werden mehrere Polyester-Oligomere verwendet, so können diese bei der Herstellung des Glycidyl(meth)acrylat-Copolymeren als Gemisch vorliegen oder es können einzelne oder ein Teil der Polyester eingesetzt und die restlichen Polyester zu einem späteren Zeitpunkt zugesetzt werden.

Die Herstellung des Glycidyl(meth)acrylat-Copolymeren erfolgt durch radikalische Polymerisation in kontinuierlicher Arbeitsweise. Dazu wird Polyesteroligomer allein oder ein Gemisch aus Glycidyl(meth)acrylat-Copolymer und Polyester-Oligomer in einem Verhältnis von Copolymer zu Oligomer von 95 : 5 bis 50 : 50 in einem Reaktionsgefäß vorgelegt, auf Reaktionstemperatur geheizt und Glycidyl(meth)acrylat, weitere vinylische Monomere, Oligoester sowie gegebenenfalls Radikalinitiatoren kontinuierlich zudosiert. Wird das Gemisch aus Copolymer und Polyesteroligomer vorgelegt, erfolgt die Zudosierung dabei so, daß das Verhältnis zwischen dem Glycidyl(meth)acrylat-Copolymer und dem Oligoester konstant über die Zeit 95 : 5 bis 50 : 50 beträgt, vorzugsweise 70 : 30 bis 55 : 45, besonders bevorzugt 60 : 40.

Durch Einstellen einer bestimmten Fließrate wird eine Verweilzeit des Monomeren, des Oligoesters und gegebenenfalls Radikalinitiators in dem Reaktionsgefäß von mindestens 10 Minuten bis zu 120 Minuten gewährleistet, innerhalb derer die Bildung des Glycidyl(meth)acrylat-Copolymeren erfolgt. Glechzeitig wird durch die gewählte Fließrate gewährleistet, daß eine bestimmte konstante Menge an Monomerenmischung in der Reaktorzone verbleibt. Das gebildete Glycidyl(meth)acrylat-Copolymer wird aus dem Reaktionsgemisch kontinuierlich entfernt mit der gleichen Fließrate, mit der die Monomerenmischung und der Oligoester zugeführt werden.

Die Polymerisationstemperatur kann beispielsweise in einem Bereich von 180°C bis 280°C variieren, je nach der verwendeten Monomerzusammensetzung. Innerhalb dieses Temperaturbereiches ist das Verhältnis an gewünschten Eigenschaften bezüglich Molekulargewicht, Dispersionsindex, Reinheit und Umsatz am günstigsten. Oberhalb einer Temperatur von 280°C können gegebenenfalls unerwünschte Vergilbungen, Depolymerisation sowie unerwünschte Nebenprodukte auftreten.

Dabei kann man mit Drücken bis zu 20 bar arbeiten. Prinzipiell ist es auch möglich, drucklos zu arbeiten.

Darüber hinaus kann auch eine zusätzliche Beaufschlagung von Druck erfolgen, beispielsweise durch Mitverwendung von Gasen als Hilfsstoff, wodurch eine Senkung der Reaktionstemperatur bewirkt werden kann.

Die Verwellzeit und damit die Reaktionszeit wird kontrolliert durch Einstellen der Fließrate der Reaktanden und des Oligoesters bzw. des Reaktionsproduktes durch den Reaktor. Bei hoher Fließrate verkürzt sich die Reaktionszeit zwischen den Reaktanden und umgekehrt. Insbesondere bei erhöhten Verweilzeiten kann das Molekulargewicht des Glycidyl(meth)acrylat-Copolymeren erfindungsgemäß gesenkt werden im erfindungsgemäß gegebenen Temperaturbereich, Das Molekulargewicht des erfindungsgemäßen Copolymeren kann ebenfalls gesenkt werden durch Erhöhung der Reaktionstemperatur innerhalb des erfindungsgemäßen Temperaturbereiches bei einer gegebenen Verweilzeit.

Um einen möglichst hohen Monomer-Umsatz sowie die gewünschte niedrige Molmasse mit enger Vertellung gewährleisten zu können, hat die mittlere Verweilzeit einen Mindestwert von 10 Minuten, abhängig vom Reaktortyp. Bevorzugt werden mittlere Verwellzeiten von 20 bis 120 Minuten, besonders bevorzugt von 30 bis 90 Minuten beispielsweise bei Verwendung eines kontinuierlich arbeitenden Rührkessels eingestellt. Beispielsweise kann bei einer Temperatur von 230°C und einer Verweilzeit von 65 Minuten ein Molekulargewicht Mn in Höhe von 2000 g/mol resultieren.

Die Polymerisationsreaktion erfolgt lösemittelfrei. Stattdessen wird das erfindungsgemäß verwendete Polyester-Oligomer eingesetzt.

Die Polymerisationsreaktion wird vorzugsweise mit geringen Mengen an Radikalinitiatoren gestartet. Für eine vollständige Umsetzung der Monomerenmischung zum gewünschten Glycidyl(meth)acrylat-Copolymeren und ohne gleichzeitiges Hervorrufen von unerwünschten Nebenreaktionen und somit für einen schnellen, effizienten und ökonomischen Polymerisationsprozeß ist es vorteilhaft, den "Einsatz von Polymerisationsinitiatoren soweit wie möglich zu senken. Bei Verwendung der Initiatoren wird deren Art und Menge so gewählt, daß am Ende der Reaktion diese vollständig verbraucht sind. Die Initiatoren können beispielsweise in einer Menge von 0 bis 4 Gew.-%, bezogen auf die Monomeren-Einwaage, der Monomerenmischung zugesetzt werden.

Beispiele für Radikalinitiatoren sind Dialkylperoxide, Diacylperoxide, Hydroperoxide, Perester, Peroxiddicarbonate, Perketale, Ketonperoxide, Azoverbindungen und CCspaltende Initiatoren.

Besonders bevorzugt wird initiatorfrei gearbeitet.

Zur Regelung des Molekulargewichts können geringe Mengen an üblichen Kettenüberträgern mitverwendet werden, beispielsweise Mercaptane, Thioglycolester, Chlorkohlenwasserstoffe, Cumol.

Die erfindungsgemäßen Polymerisationsbedingungen wie Reaktionstemperatur, Verweilzeit und Zusammensetzung der Reaktionsmischung ermöglichen die Bildung von erfindungsgemäßen Glycidyl(meth)acrylat-Copolymeren mit einem Zahlenmittel der Molmasse Mn (bestimmt durch Gelpermeationschromatographie unter Verwendung von Polystyrol als Eichsubstanz) zwischen 1000 und 6000 g/mol, insbesondere zwischen 2000 und 3000 g/mol, bei einem Monomer-Umsatz von 90 bis 95 % und einem Dispersionsindex unter 2.

Die erfindungsgemäßen Glycidyl(meth)acrylat-Copolymeren liegen bevorzugt in einem Glasübergangstemperaturbereich zwischen -5 und +50°C, bevorzugt zwischen 0 und +40°C. Sie weisen bevorzugt eine OH-Zahl von 10 bis 350 mg KOH/g und eine Säurezahl von 0 bis 2,5 mg KOH/g auf. Bevorzugt sind die erfindungsgemäßen Glycidyl(meth)acrylat-Copolymeren frei von sauren Gruppen.

Als Monomere zur Herstellung der Glycidyl(meth)acrylat-Copolymeren sind neben dem Glycidyl(meth)acrylat weitere Monomere einsetzbar. Dies können beispielsweise sein Hydroxyalkylester der (Meth)acrylsäure, nicht-funktionalisierte (Meth)acrylate sowie weitere nicht-funktionalisierte Monomere.

Der Ausdruck (Meth)acryl steht für Acryl und/oder Methacryl.

Als Beispiele für Monomere mit Hydroxyfunktionen sind folgende Verbindungen einsetzbar: Hydroxyalkylester von α,β-ungesättigten Carbonsäuren wie (Meth)acrylsäure, z.B. Hydroxyethyl(meth)acrylat, Butandiolmonoacrylat, Umsetzungsprodukte von Hydroxyethyl(meth)acrylat mit Caprolacton, Addukte aus Glycidyl(meth)acrylat und gesättigten kurzkettigen Fettsäuren, Addukte aus Glycidylestern stark verzweigter Monocarbonsäuren, z.B. Cardura E (Glycidylester der Versaticsäure) mit ungesättigten COOH-funktionellen Verbindungen wie z.B. (Meth)acrylsäure, Maleinsäure, Crotonsäure, Addukte aus Cardura E mit ungesättigten Anhydriden wie z.B. Maleinsäureanhydrid, Umsetzungsprodukte aus Glycidyl(meth)acrylat mit gesättigten verzweigten oder unverzweigten Fettsäuren, z.B. Butansäure, Capronsäure, Palmitinsäure.

Beispiele für nicht-funktionalisierte (Meth)acrylate sind langkettige verzweigte oder unverzweigte Alkyl(meth)acrylate wie beispielsweise Ethylhexyl(meth)acrylat, Decyl(meth)acrylat, Hexadecyl(meth)acrylat, tert.-Butylcyclohexyl(meth)acrylat.

Beispiele für kurz- und mittelkettige Alkyl(meth)acrylate sind Methyl(meth)acrylat, Butyl(meth)acrylat, Pentyl(meth)acrylat, Dodecyl(meth)acrylat, Octadecenyl(meth)acrylat. Bevorzugte Monomere sind Methyl(meth)acrylat und Butyl(meth)acrylat.

Beispiele für nicht-funktionalisierte weitere Monomere sind monovinylaromatische Verbindungen, beispielsweise Styrol, Vinyltoluol, Chlorstyrol, Methylstyrol, Vinylphenol, Vinylester von α,α-dialkylsubstituierten verzweigten aliphatischen Monocarbonsäuren sowie Alkylester der Maleinsäure, Fumarsäure, Tetrahydrophthalsäure, Crotonsäure, Vinylessigsäure. Bevorzugt werden Styrol und seine Derivate wie z.B. Vinyltoluol eingesetzt.

Gegebenenfalls können darüber hinaus weitere Monomere wie mehrfach ungesättigte Monomere zum Einsatz kommen. Beispiele für mehrfach ungesättigte Monomere sind Monomere mit mindestens zwei polymerisierbaren olefinisch ungesättigten Doppelbindungen wie z.B. Hexandioldi(meth)acrylat, Ethylenglykoldi(meth)acrylat, Trimethylolpropantri(meth)acrylat. Derartige Monomere sind vorteilhafterweise zu einem Anteil von unter 5 Gew.-%, bezogen auf das Gesamtgewicht der Monomere, in dem Monomerengemisch enthalten. Bevorzugt wird ein Monomerengemisch aus Glycidyl(meth)acrylat, hydroxyalkylestern der (Meth)acrylsäure, nicht-funktionalisierten (Meth)acrylaten sowie nicht-funktionalisierten weiteren Monomeren eingesetzt, besonders bevorzugt ein Monomerengemisch aus Glycidyl(meth)acrylat, nicht-funktionalisierten (Meth)acrylaten und nicht-funktionalisierten weiteren Monomeren.

Der Mengenantell kann beispielsweise in folgenden Bereichen variieren:

| | |
|---|---|
| 3 bis 80 Gew.-% | Glycidyl(meth)acrylat |
| 0 bis 30 Gew.-% | Hydroxyalkylester der (Meth)acrylsäure |
| 20 bis 80 Gew.-% | nicht-funktionalisierte (Meth)acrylate sowie |
| 0 bis 80 Gew.-% | nicht-funktionalisierte weitere Monomere, |

wobei die Summe der Monomeren sich jeweils auf 100 Gew.-% ergänzt. Belspielsweise kann eine Monomerzusammensetzung von 30 bis 35 Gew.-% Styrol, 20 bis 50 Gew.-% Glycidyl(meth)acrylat und 20 bis 45 Gew.-% Butylacrylat zum Einsatz kommen.

Das erfindungsgemäß eingesetzte Polyester-Oligomer besitzt ein Zahlenmittel der Molmassen Mn von 200 bis 2000, bevorzugt von 500 bis 1000 g/mol eine OH-Zahl von 120 bis 460 mg KOH/g, besonders bevorzugt von 150 bis 280 mg KOH/g sowie eine Säurezahl von 0 bis 5 mg KOH/g. Das Polyester-Oligomer enthält vorzugsweise funktionelle Gruppen, welche im wesentlichen nicht mit denen der erfindungsgemäßen Monomere oder des Copolymeren reagieren. Das Polyester-Oligomer kann beispielsweise hergestellt werden durch Polykondensation von Polycarbonsäuren mit mehrwertigen Alkoholen nach üblichen, dem Fachmann geläufigen Verfahren, beispielsweise in Gegenwart von üblichen Veresterungskatalysatoren und bei erhöhten Reaktionstemperaturen von z.B. 180 bis 250°C, beispielsweise in der Schmelze.

Geeignete Polycarbonsäuren bzw. deren Anhydride sind beispielsweise Phthalsäureanhydrid, Hexahydrophthalsäure(anhydrid), Cyclohexandicarbonsäure, Maleinsäure(anhydrid), Bernsteinsäure(anhydrid), Adipinsäure, Sebacinsäure, Trimerfettsäuren sowie Gemische dieser und anderer Säuren. Geeignete mehrwertige Alkohole sind beispielsweise Ethylenglykol, Propylenglykol, Butandiol, Hexandiol, Triethylenglykol, hydrierte Bisphenole, Glyzerin, Trimethylolpropanpentaerythrit sowie Gemische dieser und anderer mehrwertiger Alkohole.

Zusätzlich können auch Monocarbonsäuren, einwertige Alkohole sowie Hydroxycarbonsäuren zum Einsatz kommen. Beispiele für Monocarbonsäuren sind Benzoesäure, Hexahydrobenzoesäure, hydrierte technische Fettsäuren wie Stearinsäure, Palmitinsäure. Beispiele für einwertige Alkohole sind n-Hexanol, Cyclohexanol, Dodecanol, Octanol, natürliche und synthetische Fettalkohole wie z.B. Laurylalkohol. Beispiele für Hydroxycarbonsäuren sind Dimethylpropionsäure, Milchsäure, Apfelsäure, Weinsäure, e-Caprolacton.

Bevorzugt wird ein aromatenfreies Polyester-Oligomer eingesetzt auf der Basis von Polycarbonsäuren, beispielsweise Hexahydrophthalsäureanhydrid, sowie zweiwertigen Alkoholen, beispielsweise 1,6-Hexandiol.

Zur Durchführung des Verfahrens sind dem Fachmann geläufige Reaktoren für die kontinuierliche Arbeitsweise geeignet. Sie verfügen z.B. über Einrichtungen zur Zufuhr von Monomeren und anderen Reaktanden, z.B. Hilfsstoffe, sowie Einrichtungen zum Abzug der Endprodukte. Als Reaktoren sind beispielsweise kontinuierlich betriebene Rührkessel, Rohrreaktoren oder Kombinationen verschiedener Reaktoren verwendbar.

Erfindungsgemäß ist es vorteilhaft, einen Reaktor zu verwenden, welcher eine kontinuierliche Arbeitsweise durch kontinuierliches Zuführen der Monomere und weiteren Einsatzstoffe und kontinuierliches Abführen des Endproduktes ermöglicht und darüber hinaus nicht nur teilweise, sondern vollständig befüllt, d.h. geflutet, betrieben werden kann. In einem derartigen Reaktor kann eine kontinuierliche Durchmischung des Inhaltes beispielsweise durch Rührung mit einem oder mehreren Rührern und/oder durch kontinuierliches Aus- und Einkreisen eines Teils der Inhaltsstoffe aus dem Reaktor wieder in den Reaktor hinein erfolgen.

Mit dem erfindungsgemäßen Verfahren resultiert ein niedermolekulares Glycidyl(meth)acrylat-Copolymer mit einer engen Molmassenverteilung. Durch die Verfahrensführung im Schoße des Polyester-Oligomeren sowie in Abwesenheit im wesentlichen von Kettenübertragungsmitteln und Radikalinitiatoren sowie unter Verzicht auf Lösemittel wird ein nahezu vollständiger Umsatz der Monomeren erreicht. Minimale Mengen an unreagierten Monomeren können während oder nach Beendigung der Reaktion in den Reaktionsprozeß rückgeführt werden.
Reaktionsbedingungen wie hohe Reaktionstemperatur und Verweilzeit tragen ebenfalls zu einem hohen Monomerumsatz bei und führen zu den erfindungsgemäßen niedrigmolekularen, ungelierten Glycidyl(meth)acrylat-Copolymeren.

Darüber hinaus kann insbesondere durch das Verwenden des kontinuierlich arbeitenden gefluteten und kontinuierlich durchmischten Reaktors ein niedermolekulares Glycidyl(meth)acrylat-Copolymer erzielt werden mit einem stets einheitlichen Produktaufbau.

Die erfindungsgemäß hergestellten Glycidyl(meth)acrylat-Copolymere sind beispielsweise einsetzbar als Bindemittel in Lackzusammensetzungen einzeln oder im Gemisch mit weiteren Bindemitteln sowie gegebenenfalls Vernetzern.

Durch das Vorliegen des erfindungsgemäß hergestellten Glycidyl(meth)acrylat-Copolymeren in dem erfindungsgemäß verwendeten Polyester-Oligomer steht eine anwendungsbereite Form für den Einsatz in Lackzusammensetzungen zur Verfügung, so daß die üblichen erforderlichen Lösungs- bzw. Dispergierarbeitsschritte bei der Herstellung der Lackzusammensetzungen nicht mehr erforderlich sind. Darüber hinaus kann durch das erfindungsgemäße Verfahren eine Verträglichkeitsvermittlung zwischen dem Glycidyl(meth)acrylat-Copolymeren und dem Polyester-Oligomer erzielt werden.

Generell sind die erfindungsgemäß hergestellten Glycidyl(meth)acrylat-Copolymere auch geeignet für den Einsatz in Pulverlack-Zusammensetzungen.

Die folgenden Beispiele beschreiben die erfindungsgemäße kontinuierliche Arbeitsweise anhand von konkreten Monomeren, Reaktionsbedingungen, Reaktionsprodukt.

### 1. Beispiel

Synthese eines Oligoesters:

In einem 4-Liter-Dreihalskolben ausgestattet mit Wasserabscheider, Rückflußkühler und Rührer werden 1603 g Hexandiol, 1394 g Hexahydrophthalsäureanhydrid und 3 g hypophosphorige Säure vorgelegt und aufgeschmolzen. Unter Rückfluß wird unter Abscheiden von Wasser bis maximal 240°C erhitzt, bis eine Säurezahl ≤ 2 mg KOH/g Festharz erreicht wird. Das erhaltene Produkt besitzt eine Viskosität von 5000 mPas bei 25°C und eine Farbzahl von maximal 50 Hazen.

### Herstellung einer Monomerenmischung:

Die nachfolgend verwendete Monomerenmischung setzt sich aus 30 Gew.-% Styrol, 35 Gew.-% Butylacrylat und 35 Gew.-% Glycidylmethacrylat zusammen.

### Kontinuierliche Polymerisation:

In einem gerührten 1 Liter Edelstahlreaktor ausgestattet mit einem öltemperierbaren Doppelmantel, Ankerrührer, zwei Dosierpumpen zur Regelung von Feedstrom und Exitstrom und einer Füllstandsregelung werden 440 g des Oligoesters vorgelegt und auf Reaktionstemperatur erwärmt. Nach Erreichen von 230°C wird ein Feedstrom der Monomerenmischung und des Oligoesters sowie ein Exitstrom der Reaktionsmasse so eingestellt, daß sich eine Verweilzeit von 62 Minuten ergibt. Eine nach 310 Minuten gezogene Probe weist einen monomerspezifischen Umsatz an Styrol von 91 %, an Glycidylmethacrylat von 89 % und an Butylacrylat von 84 % auf. Es wurde ein Zahlenmittel der Molmasse des Acrylates von 2600 g/mol, ein Gewichtsmittel der Molmasse von 4,100 g/mol und ein Dispersionsindex D = Mw/Mn von 1,6 ermittelt.

### Beispiel 2

### Herstellung eines Lackes

50 Teile des in Beispiel 1 aus der kontinuierlichen Polymerisation erhaltenen Harzes werden mit 50 Teilen eines handelsüblichen sauren Polyesters mit einer Säurezahl von 210 g/mol vermischt und mit einem 1 : 1-Gemisch aus Xylol/Butylacetat auf eine Spritzviskosität von 25 Sekunden AK4 verdünnt.

Ein kataphoresetauchlackiertes Blech, das mit einem handelsüblichen Wasserbasislack lackiert wurde, wird anschließend mit einer Spritzpistole und dem oben genannten Lack mit einer Trockenschichtdicke von 40 µm lackiert. Das Blech wird 25 Minuten bei 140°C eingebrannt. Der erhaltene Klarlackfilm zeichnet sich durch eine hochbrilliante sehr gut verlaufene Oberfläche aus.

## Patentansprüche

1. Verfahren zur Herstellung von Glycidyl(meth)acrylat-Copolymeren mit einem Zahlenmittel der Molmasse (Mn) von 1000 bis 6000 g/mol, durch Copolymerisation von einem oder mehreren Glycidyl(meth)acrylaten mit einem oder mehreren ethylenisch ungesättigten Monomeren, in Gegenwart eines Polyester-Oligomeren mit einem Zahlenmittel der Molmasse (Mn) von 200 bis 2000 g/mol, **dadurch gekennzeichnet, daß** die Copolymerisation lösemittelfrei und kontinuierlich In einem Reaktionsgefäß mit Zuführ- und Entnahmeeinrichtungen durchgeführt wird, wobel Polyesteroligomer oder ein Gemisch aus Glycidyl(meth)acrylat)-Copolymer und Polyesteroligomer in einem Gewichtsverhältnis von Copolymer zu Oligomer von 95 : 5 bis 50 : 50 vorgelegt wird und die Glycidyl(meth)acrylate, weitere Monomere, weitere Polyester-Oligomer sowie gegebenenfalls Radikalinitiatoren zudosiert werden, wobei die Zudosierung von Glycidyl(meth)acrylaten, weiteren Monomeren, Polyester-Ollgomer sowie gegebenenfalls Radikalinitiatoren und die Entnahme der gebildeten Copolymeren so erfolgen, daß die mittlere Verweilzeit 10 bis 120 Minuten beträgt, und wobei im Falle des vorgelegten Gemisches aus Glycidyl(meth)acrylat-Copolymer und Polyester-Oligomer so zudosiert wird, daß das Verhältnis con Copolymer zu Oligomer erhalten bleibt.

2. Verfahren nach Anspruch 1, **dadurch gekennzeichnet, daß** bei einer Temperatur von 180 bis 280°C gearbeitet wird.

3. Verfahren nach einem der Ansprüche 1 oder 2, **dadurch gekennzeichnet, daß** das Gewichtsverhältnis zwischen dem Glycidyl(meth)acrylat-Copolymer und dem Polyester-Oligomer 70 : 30 bis 55 : 45 beträgt.

4. Verfahren nach einem der Ansprüche 1 bis 3, **dadurch gekennzeichnet, daß** mit einem Monomerengemisch von
3 bis 80 Gew.-% Glycidyl(meth)acrylat,
0 bis 30 Gew.-% eines oder mehrerer Hydroxyalkylester der (Meth)acrylsäure, 20 bis 80 Gew.-% eines oder mehrerer nicht-funktionalisierter (Meth)acrylate, sowie
0 bis 80 Gew.-% eines oder mehrerer ethylenisch ungesättigter Monomerer gearbeitet wird, wobei die Summe der Monomeren sich jeweils auf 100 Gew.-% ergänzt.

5. Verfahren nach einem der Ansprüche 1 bis 4, **dadurch gekennzeichnet, daß** ein Reaktor zur kontinuierlichen Zuführung der Monomere und weiteren Einsatzstoffe sowie zur kontinuierlichen Abführung des Endproduktes eingesetzt wird, wobei der Reaktor vollständig befülit betrieben wird und eine kontinuierliche Durchmischung im Reaktor erfolgt durch Einsatz eines oder mehrerer Rührer und/oder durch eine kontinuierliche Kreislaufführung eines Teils des Reaktorinhattes aus dem Reaktor wieder in den Reaktor hinein.

6. Verwendung der nach dem Verfahren eines der Ansprüche 1 bis 5 erhaltenen Copolymerisate zur Herstellung von Überzugsmitteln.

## Claims

1. Process for the production of glycidyl (meth)acrylate copolymers having a number average molecular weight (Mn) of 1000 to 6000 g/mol by copolymerisation of one or more glycidyl (meth)acrylates with one or more ethylenically unsaturated monomers in the presence of a polyester oligomer having a number average molecular weight (Mn) of 200 to 2000 g/mol, **characterised in that** the copolymerisation is performed solvent-free and continuously in a reaction vessel with feeding and withdrawing devices, whereby polyester oligomer or a mixture of glycidyl (meth)acrylate copolymer and polyester oligomer in a ratio by weight of copolymer to oligomer of 95 : 5 to 50 : 50 is prepared and the glycidyl (meth)acrylates, additional monomers, additional polyester oligomers and optionally radical initiators are added, whereby addition of glycidyl (meth)acrylates, additional monomers, polyester oligomers and optionally radical initiators and removal of the copolymers formed is performed in such a way that the average residence time is 10 to 120 minutes and whereby if a mixture of glycidyl (meth)acrylate copolymer and polyester oligomer is used, the addition is performed in such a way that the ratio of copolymer to oligomer is maintained.

2. Process according to claim 1, **characterised in that** it is performed at a temperature of 180 to 280°C.

3. Process according to one of claims 1 or 2, **characterised in that** the ratio by weight of glycidyl (meth)acrylate copolymer to polyester oligomer is 70 : 30 to 55 : 45.

4. Process according to one of claims 1 to 3, **characterised in that** it is performed with a monomer mixture of
3 to 80 wt.% glycidyl (meth)acrylate,
0 to 30 wt.% of one or more hydroxyalkyl esters of (meth)acrylic acid,
20 to 80 wt.% of one or more non-functionalised (meth)acrylates and
0 to 80 wt.% of one or more ethylenically unsaturated monomers,
whereby the sum of the monomers adds up to 100 wt.%.

5. Process according to one of claims 1 to 4, **characterised in that** a reactor is used for the continuous supply of monomers and additional feed materials and for the continuous removal of the end product, whereby the reactor is operated at maximum fill capacity and continuous mixing occurs in the reactor through the use of one or more stirrers and/or through continuous circulation of part of the reactor content out of the reactor and back into the reactor.

6. Use of the copolymers obtained by the process according to one of claims 1 to 5 for the production of coatings.

## Revendications

1. Procédé de préparation de copolymères de (méth)-acrylate de glycidyle ayant une masse moléculaire moyenne en nombre (Mn) de 1000 à 6000 g/mole, par copolymérisation d'un ou plusieurs (méth)acrylates de glycidyle avec un ou plusieurs monomères à insaturation éthylénique, en présence d'un polyester oligomère ayant une masse moléculaire moyenne en nombre (Mn) de 200 à 2000 g/mole, **caractérisé en ce que** la copolymérisation est mise en oeuvre en l'absence de solvant et en continu dans un réacteur comportant des dispositifs d'introduction et de prélèvement, on met en place le polyester oligomère ou un mélange du copolymère de (méth)acrylate de glycidyle et du polyester oligomère selon un rapport en poids du copolymère à l'oligomère de 95:5 à 50:50, et on ajoute les (méth)-acrylates de glycidyle, d'autres monomères, d'autres polyesters oligomères, et éventuellement des amorceurs radicalaires, l'addition des (méth)acrylates de glycidyle, des autres monomères, des polyesters oligomères et éventuellement des amorceurs radicalaires, ainsi que le prélèvement des copolymères formés, s'effectuant de telle sorte que le temps moyen de séjour soit de 10 à 120 minutes, et, dans le cas du mélange mis en place, constitué du copolymère de (méth)acrylate de glycidyle et du polyester oligomère, l'addition se fasse de façon que le rapport du copolymère à l'oligomère se maintienne.

2. Procédé selon la revendication 1, **caractérisé en ce qu'**on travaille à une température de 180 à 280°C.

3. Procédé selon l'une des revendications 1 ou 2, **caractérisé en ce que** le rapport en poids entre le copolymère de (méth)acrylate de glycidyle et le polyester oligomère est de 70:30 à 55:45.

4. Procédé selon l'une des revendications 1 à 3, **caractérisé en ce qu'**on travaille avec un mélange de monomères constitué
de 3 à 80 % en poids de (méth)acrylate de glycidyle,
de 0 à 30 % en poids d'un ou plusieurs esters hydroxyalkyliques de l'acide (méth)acrylique, de 20 à 80 % en poids d'un ou plusieurs (méth)acrylates non fonctionnalisés, et de 0 à 80 % en poids d'un ou plusieurs monomères à insaturation éthylénique, la somme des monomères étant dans tous les cas égale à 100 % en poids.

5. Procédé selon l'une des revendications 1 à 4, **caractérisé en ce qu'**on utilise un réacteur pour l'introduction en continu des monomères et des autres matières de départ, et pour l'évacuation continue du produit final, le réacteur étant exploité en étant complètement rempli, et un mélange continu intime dans le réacteur est réalisé par utilisation d'un ou plusieurs agitateurs et/ou par réalisation d'un circuit fermé continu d'une partie du contenu du réacteur, qui va sortir du réacteur et qui va y pénétrer de nouveau.

6. Utilisation, pour préparer des compositions de revêtement, des copolymères obtenus par le procédé selon l'une des revendications 1 à 5.
